Europäisches Patentamt

European Patent Office

Office européen des brevets

(19)

(11) Veröffentlichungsnummer: **0 107 800**
**A2**

(12) # EUROPÄISCHE PATENTANMELDUNG

(21) Anmeldenummer: 83109712.6

(22) Anmeldetag: 28.09.83

(51) Int. Cl.³: **C 08 G 65/36**
C 08 L 71/06, C 08 G 16/02
C 08 L 61/00, C 08 L 61/34

(30) Priorität: 02.10.82 DE 3236585

(43) Veröffentlichungstag der Anmeldung:
09.05.84 Patentblatt 84/19

(84) Benannte Vertragsstaaten:
DE FR GB

(71) Anmelder: HOECHST AKTIENGESELLSCHAFT
Postfach 80 03 20
D-6230 Frankfurt am Main 80(DE)

(72) Erfinder: Semmler, Hans-Joachim, Dr.
Schwedenstrasse 41
D-6203 Hochheim am Main(DE)

(54) Verfahren zur Herstellung einer Kittharz-Lösung.

(57) Kittharz-Lösungen für chemikalienbeständige Kitte werden hergestellt, indem man ein Harz in Furfuryl auflöst oder man unter Verwendung von Furfurylalkohol durch saure Kondensation eine Harzlösung herstellt. Der Harzlösung werden 0,01 bis 0,1 Val eines primären Amins pro Liter zusetzt.

EP 0 107 800 A2

Croydon Printing Company Ltd.

HOECHST AKTIENGESELLSCHAFT                    0107800

HOE 82/F 195

Verfahren zur Herstellung einer Kittharz-Lösung

Die vorliegende Erfindung betrifft ein Verfahren zur Herstellung einer Kittharz-Lösung für chemikalienbeständige Kitte, die im Makromolekül Furan-Ringe enthalten.

Für Auskleidungen, Verlege- und Verfugemassen werden in der chemischen Industrie und in Bereichen, in denen mit der Einwirkung von aggresiven Chemikalien auf Bodenfächen und Wandflächen zu rechnen ist, häufig Kunstharzkitte eingesetzt, die als Lösungsmittel Furfurylalkohol und als Harzanteil übliche Harzresole enthalten. Diese Harzresole werden z. B. aus Phenol und Formaldehyd oder aus Furfural und Formaldehyd hergestellt, wobei dann das entstehende Makromolekül Furan- oder Benzolringe enthält. Furfurylalkohol wirkt als sogenannter reaktiver Verdünner, das heißt er liegt in der Kittharz-Lösung frei vor und wird erst bei der Erhärtung des Kittes beim Endanwender durch Vernetzung in das End-Makromoleküles des Duroplastes eingebaut.

Die Herstellung säurebeständiger Harzüberzugsmassen aus Phenolformaldehyd-Harz und Furfurylalkohol oder Furfural ist Gegenstand der DE-PS 852 906 und 874 836.

Die Aushärtung der Harzlösung wird durch die katalytische Wirkung sauer Substanzen, gegebenenfalls unter gleichzeitiger Anwendung von Wärme und Druck, erreicht. Ein Beispiel für die Härtung bei erhöhter Temperatur wird in der DE-PS 874 836 gegeben. Bei der Verwendung von Furanharzen als Bindemittel für Kunstharzkitte ist die sogenannte Kalthärtung die Regel. Neben dem Härter enthält die Kittmasse noch Harz, Füllstoff (z. B. Sand, Quarzmehl, Titandioxid, Graphit, Ruß) und das Bindemittel (z. B. Furfurylalkohol). Füllstoff und Katalysator (Härter) sind dabei in den meisten Fällen vorgemischt und werden erst vom Endverbraucher mit der Harzlösung vereinigt. Ein spezieller Härter, der sich für kalthärtende Systeme eignet, wird in der DE-OS 20 34 602 beschrieben.

Als Katalysatoren werden üblicherweise Schwefelsäure, Salzsäure, Phosphorsäure, Amidosulfonsäure, organische Sulfonsäuren (z. B. Paratoluolsulfonsäure), andere organische Säuren sowie Hydrogensulfate, insbesondere Natriumhydrogensulfat eingesetzt.

Neben einer hohen chemischen Beständigkeit des Harzes wird eine gute Verarbeitbarkeit der Harzlösung und der Kittmasse angestrebt. In manchen Fällen ist es erwünscht, die Viskosität der Harzlösung zu erhöhen, ohne den Anteil an Harz zu vergrößern. Bei Harzlösungen, die zu dünn sind, besteht sonst nämlich die Gefahr, daß die Kittmasse bei Auskleiden oder Verfugen senkrechter Wände während der Aushärtung von der Wand herabfließt. Die vorliegende Erfindung löst dieses Problem.

Es wurde nun ein Verfahren zur Herstellung einer Kittharz-Lösung für chemikalienbeständige Kitte gefunden, wobei man ein Harz in Furfurylalkohol auflöst oder man unter Verwendung von Furfurylalkohol durch saure Kondensation eine Kittharz-Lösung mit einer Viskosität von maximal 1600 mPa's (gemessen bei 20$^\circ$C) herstellt, das dadurch gekennzeichnet ist, daß man der Kittharz-Lösung noch 0,01 bis 0,1 Val pro Liter eines primären Amins zusetzt. Mit dieser Erfindung gelingt es umgekehrt, bei gleichbleibender Viskosiät der Harzlösung den Anteil an Harz zu senken. Bevorzugt sind Zusätze von 0.02 bis 0.05 Val/l an primärem Amin. Die Zunahme der Viskosität nach Zugabe des Amins geschieht in einer Zeitreaktion. Bei Lagern ist in Abhängigkeit von der Temperatur die Endviskosität nach einigen Tagen erreicht. In einigen Fällen läßt sich bereits nach 24 Stunden keine weitere Steigerung der Viskosität mehr beobachten. Es ist daher sinnvoll, nach Zugabe des Amins zur Kittharz-Lösung mindestens 24 Stunden bis zur Weiterverarbeitung auf eine Kittmasse verstreichen zu lassen. Bei erhöhter Temperatur wird die Endviskosität vorher erreicht (Dauer bei 60$^\circ$C ca. 2 Std.).

Sofern die Harzlösung hergestellt wird durch saure Kondensation unter Verwendung von Furfurylalkohol, ist es sinnvoll, spätestens bei Erreichen einer Viskosität von 1600 mPa's (gemessen bei 20$^\circ$C) die Kondensation abzu- brechen. Andernfalls besteht die Gefahr, daß zu wenig restlicher Furfurylalkohol im Harz enthalten ist und der erfindungsgemäße Zusatz an primärem Amin nicht mehr wirksam ist.

Als Amine sind einsetzbar Monoamine, Diamine und Polyamine.
Bevorzugt sind Monoamine und Diamine. Unter den Monoaminen
sind die aliphatischen Monoamine bevorzugt. Beispielsweise
sind geeignet Methylamin, Ethylamin, Propylamin, Butylamin
und die höheren Fettamine bis zu 18 Kohlenstoffatomen
sowie primäre cyclische Amine, wie Cyclohexylamin. Aromatische Amine sind allein wenig wirksam und sollten nur
zusammen mit anderen Aminen verwendet werden, z. B. mit
stark basischen Polyalkyleniminen. Es ist bevorzugt,
wenn die eingesetzten primären aliphatischen Monoamine
einen pK-Wert von 3 bis 6 aufweisen. Aminocarbonsäuren und
Aminosulfosäuren sind ungeeignet. Die Anwesenheit von Hydroxylgruppen im Molekül stört nicht. Im Gegenteil, Verbindungen vom Alkanolamin-Typ (Ethanolamin, 1-Amino-2-
hydroxypropan) sind besonders wirksam.

Beispiele für erfindungsgemäß einsetzbare aliphatische Diamine sind Diaminoethan und Diaminopropan, für einsetzbare
aromatische Diamine 4,4'-Diaminodiphenylmethan und 4,4'-
Diaminodiphenylpropan. Im übrigen ist bei Einsatz von
Verbindungen mit zwei primären Aminogruppen im Molekül
der beobachtete Viskositätsanstieg der Kittharz-Lösung
wesentlich größer als bei Zusatz der aquivalenten Menge
eines Monoamins. Als Beispiele für einsetzbare Polyamine
mit zwei primären Aminogruppen seien aufgeführt Dipropylentriamin, Diäthylentriamin und die homologen Poly-äthylenimine mit bis zu maximal 18 Kohlenstoffatomen.

Als Basisharze, die in Furfurylalkohol gelöst werden, sind
alle herkömmlichen Arten, insbesondere synthetische Harze,
geeignet. Beispiele sind Phenolharze, Furfurylalkoholharze,
Furfurylaldehydharze sowie Gemische dieser Harze. Die Herstellung der Furanharze ist dem Fachmann z.B. aus der Monographie "The Furans" von A.P. Dunlop und F.N. Peters (New
York, 1953) bekannt. Vorteilhafterweise liegt die Viscosität des eingesetzten Harzes bei 20°C unter 1500 mPa's,
insbesondere unter 1300 mPa· s. Bevorzugt sind Phenol-

formaldehydharze und Phenol-Furan-Formaldehydharze. Beispielsweise kann man ein Alkylphenol mit Formaldehyd zu
zu einem Resol umsetzen und dieses nach Zusatz von Furfurylalkohol weiter zu einem Endresol verarbeiten. Dabei lassen
sich, je nach Arbeitsweise, Endresole im Viskositätsbereich
von 600 bis 5000 mPa·s erhalten. Der eigentliche Harzanteil (nicht flüchtiger Rückstand) in solchen Endresolen
liegt im Bereich zwischen 30 und 70 Gew.-%. Je höher der
eigentliche Harzanteil, um so höher ist auch die Viskosität.

Wenn man eine Harzlösung (ca. 40 % Harzanteil) einer Viskosität von 500 mPa·s mit etwa 1 Gew.-% Ethanolamin
versetzt und dann bei Raumtemperatur oder leicht erhöhter Temperatur durchrührt, so steigt schließlich die
Viskosität auf etwa 800 bis 900 mPa·s an.
Setzt man äquivalente Mengen eines Diamins zu, so ergeben
sich noch höhere Viskositäten. Falls man, nach Zugabe des
Amins, zu einer zu hohen, nicht gewünschten Viskosität
kommt, so kann man durch Vermischen mit der ursprünglichen
(aminfreien) Lösung jede dazwischenliegende Viskosität
einstellen. In allen diesen Fällen wird der Harzanteil der
Lösung nicht beeinflußt.
Will man jedoch den Harzanteil in der Harzlösung verringern, ohne die Viskosität zu verändern, so ist dies möglich,
indem man der ursprünglichen Harzlösung ein Amin zusetzt
und nach Abklingen des Viskositätsanstiegs durch Zugabe
von Furfurylalkohol (als reaktivem Verdünner) wieder die
ursprüngliche Viskosität einstellt. Durch entsprechende
Vorversuche in kleinem Maßstab läßt sich die Menge an Amin
und die eventuell notwendige Menge an Furfurylalkohol genau ermitteln und für größere Ansätze vorherberechnen.

Frisch hergestellte Harzlösungen zeigen üblicherweise einen
langsamen Viskositätsanstieg der sich über mehrere Wochen
erstrecken kann. Es ist überraschend, daß die gleichen Harzlösungen, nach dem erfindungsgemäßen Zusatz eines Amins,
zwar einen raschen Viskositätsanstieg zeigen, daß aber dann,
nach einigen Tagen, ein wesentlicher Anstieg nicht mehr
stattfindet. Es ist weiterhin überraschend, daß der Zusatz der Amine die Härtung der Harze in den fertig angemischten Kittmassen durch die übliche Weise zugesetzten Säuren oder Säurevorstufen nicht beeinträchtigt. Im Gegensatz dazu wird beim Verfahren der US-PS 28 13 846 die als Härter wirkende Sulfosäure mit Benzidin vermischt und zu der Furfurylalkohl enthaltenden Harzlösung gegeben, um die Härtungszeit zu verringern.

Die chemische Beständigkeit der Kitte mit Aminzusatz entspricht etwa der der Kitte ohne Aminzusatz. Ferner wurde festgestellt, daß der Gehalt der Harzlösungen an toxischem Furfural, das häufig als Nebenprodukt vorhanden ist, nach Einmischung der Amine vermindert ist.

Die Erfindung wird durch die Beispiele näher erläutert.

### Beispiel 1

a) Herstellung einer Harzlösung Gemäß Beispiel 1 a der DE-OS 2 926 053 werden 7 g Nonylphenol, die 2 % Dinonylphenol enthalten sowie 45,6 g Diphenylolpropan in 400 g Xylol gelöst und bei 50 - 60°C mit Natronlauge zur Reaktion gebracht. Danach werden 650 g 37 %ige Formaldehyd-Lösung eingerührt. Nach mehreren Stunden wird die Reaktionsmischung schwefelsauer gestellt und die wäßrige Phase abgetrennt. Man gibt zur organischen Phase 780 g Furfurylalkohol und trennt das Xylol ab. Man erhält eine Harzlösung mit etwa 50 % Rückstand (eigentlicher Harzanteil) und einer Viskosität von etwa 700 bis 800 mPa·s.

b) Zugabe der Aminoverbindung In 1000 g dieser Harzlösung werden 2,0 g Ethylendiamin eingerührt. Die Viskosität dieser Lösung wird nach 3 Tagen Lagerung bei 25°C gemessen und beträgt ca. 925 $\pm$ 25 mPa·s. Nach weiteren 4 Tagen Lagerung bei Raumtemperatur hat sich der Viskositätsanstieg stabilisiert; es ergibt sich eine Viskosität von etwa 1150 $\pm$ 50 mPa·s. Dieser Viskositätsbereich wird auch bei weiterer Lagerung eingehalten. Der Wert für den eigentlichen Harzanteil (Rückstand) ist unverändert.

c) Einstellung der Viskosität  .

Die Lösung von Beispiel 1 b mit einer Viskosität von 1150 ± 50 mPa·s wird mit der ursprünglichen Harzlösung von Beispiel 1 a im Verhältnis 1:1 vermischt. Die entstehende Mischung weist ebenfalls 50 % Rückstand sowie eine Viskosität von ca. 1000 mPa·s auf.

Mit anderen Mischungsverhältnissen läßt sich jede Viskosität zwischen etwa 700 und 1200 mPa·s einstellen. Analog lassen sich durch Vermischen der Lösung von Beispiel 1 b mit Furfurylalkohol (unter Verringerung des Rückstandes) noch wesentlich niedrigere Viskositäten erreichen.

d) Gemäß Beispiel 1 b der DE-OS 2 926 053 wurde aus 93 g Koksmehl, 0,5 g Phosphorsäure, 4 g Amidosulfonsäure und 2 g Oxalsäure ein pulverförmiges Füllstoff-Katalysatorgemisch hergestellt. Von diesem Kittmehl wurden 100 g mit 40 - 55 g Harzlösung von Beispiel 1 c (je nach der gewünschten Konsistenz) zu einem gebrauchsfertigen Kitt angemischt. Die Eigenschaften dieses Kittes entsprechen hinsichtlich Verarbeitungsfähigkeit und Beständigkeit bekannten Kittmassen.

Beispiel 2

Ähnliche Kittmassen wie in Beispiel 1 d lassen sich mit den unter 1 c beschriebenen Harzlösungen und einem Kittmehl auf Basis von Quarzmehl und 2 bis 4 % Paratoluolsulfonsäure als Härter herstellen.

Beispiel 3

In Tabelle 1 wird der Einfluß der aminogruppenhaltigen Zusätze auf die Furanharzlösung von Beispiel 1 a gezeigt. Hierzu wurde die Harzlösung mit dem Amin vermischt und 24 Stunden bei Raumtemperatur stehengelassen. Gehalte von 0,2 % an aminogruppenhaltiger Substanz reichen aus, um den Furfuralgehalt unter 0,2 % zu senken. Die niedermolekularen Monoamine beeinflussen die Viskosität offensichtlich nur wenig, während die Diamine die Viskosität wesentlich stärker erhöhen.

Beispiel 4

In den Tabellen 2 und 3 ist die Zeitabhängigkeit der Viskosität der mit aminogruppenhaltigen Zusätzen modifizierten Furanharzlösung gezeigt. Es zeigt sich, daß der Viskositätsanstieg nach kurzer Zeit, spätestens 28 Tagen, beendet ist.

Beispiel 5

In der Tabelle 4 werden die Einflüsse einiger aminogruppenhaltiger Substanzen auf den Furfuralgehalt gezeigt. Es zeigt sich (vgl. Versuch Nr. 4), daß auch bei anfänglich extrem hohen Furfuralgehalten (2 %) mit der erfindungsgemäßen Maßnahme der Furfuralgehalt unter 0,2 % herabgesenkt werden kann.

Tabelle 1

Einfluß von aminhaltigen Zusätzen auf Furanharzlösungen

| Nr. | Zusatz | Viskositätsanstieg gegenüber Ausgangs- lösung (mPa·s) | Furfuralgehalt |
|---|---|---|---|
| 1 | - | - | größer als 0,25 % |
| 2 | 0,26 % Ethanolamin | 0 | 0,08 % |
| 3 | 0,5 % Ethanolamin | 0 | 0,06 % |
| 4 | 0,3 % Cyclohexylamin | 65 | 0,19 % |
| 5 | 0,5 % Benzylamin | 60 | 0,16 % |
| 6 | 0,25 % Ethylendiamin | 170 | 0,1 % |
| 7 | 0,5 % Butylamin | 30 | 0,1 % |
| 8 | 0,7 % Ethylamin | 5 | 0,1 % |
| 9 | 0,5 % Isopropylamin | 30 | 0,1 % |
| 10 | 0,1 % 4,4'-Diaminodi- phenylmethan | 120 | 0,2 % |

Tabelle 2

Zeitabhängigkeit der Viskosität von Furanharzlösungen mit
aminhaltigen Zusätzen bei 20°C Lagertemperatur

| Nr. | Zusatz | Viskosität (mPa·s) | | |
|---|---|---|---|---|
| | | 1 Tag | 28 Tage | 60 Tage |
| 1 | 0,5 % Ethanolamin | 930 | 1155 | 1156 |
| 2 | 0,3 % Cyclohexylamin | 990 | 1040 | 1230 |
| 3 | 0,3 % Benzylamin | 990 | 1050 | 1080 |
| 4 | 0,1 % 4,4'-Diaminodiphenylmethan | 920 | 970 | 990 |

Tabelle 3

Zeitabhängigkeit der Viskosität von Furanharzlösungen mit
aminhaltigen Zusätzen bei 50°C Lagertemperatur

| Nr. | Zusatz | Viskosität (mPa·s) | | |
|---|---|---|---|---|
| | | 1 Tag | 28 Tage | 60 Tage |
| 1 | 0,5 % n-Butylamin | 840 | 1300 | 1460 |
| 2 | 0,7 % Ethylamin | 810 | 1330 | 1450 |
| 3 | 0,5 % Isopropylamin | 860 | 1210. | 1510 |
| 4 | 0,5 % Ethanolamin | 930 | 1310 | 1420 |

0107800

Tabelle 4

Einflüsse von aminhaltigen Zusätzen auf den Furfuralgehalt
von verschiedenen Furanharzlösungen

| Nr. | Harzlösung | Zusätze | Furfuralgehalt |
|---|---|---|---|
| 1 | Furanharzlösung gem. Beispiel 1 a | - 0 - | $> 0,2\ \%$ |
| 2 | wie 1 | 0,5 % Ethanolamin | $\leq 0,1\ \%$ |
| 3 | 50 % Lösung wie 1 50 % Furfurylalkohol | 0,5 % Ethanolamin | $\leq 0,1\ \%$ |
| 4 | 50 % Lösung wie 1, 48 % Furfurylalkohol 2 % Furfural | 2,2 % Ethanolamin | $\leq 0,1\ \%$ |

- 11 -

Patentansprüche:                    HOE 82/F 195

1. Verfahren zur Herstellung einer Kittharz-Lösung für chemikalienbeständige Kitte, wobei man ein Harz in Furfurylalkohol auflöst oder man durch saure Kondensation unter Verwendung von Furfurylalkohol eine Harzlösung von einer Viskosität von maximal 1600 mPa·s (gemessen bei $20^{o}C$) herstellt, dadurch gekennzeichnet, daß man der Lösung des Harzes noch 0,01 bis 0,1 Val pro Liter eines primären Amins zusetzt.

2. Verfahren nach Anspruch 1, dadurch gekennzeichnet, daß man die Kittharz-Lösung nach Zugabe des Amins mindestens 24 Stunden reagieren läßt, bevor sie weiter verarbeitet wird.

3. Verfahren nach Anspruch 1, dadurch gekennzeichnet, daß man ein primäres Monoamin zusetzt, das einen pK-Wert von 3 bis 6 aufweist.

4. Verfahren nach Anspruch 3, dadurch gekennzeichnet, daß man als primäres Amin Ethanolamin einsetzt.

5. Verfahren zur Herstellung einer säurefesten Kittharzmasse, wobei man eine Kittharz-Lösung, die Furfurylalkohol enthält, mit Füllstoffen und einem sauren Härter versetzt, dadurch gekennzeichnet, daß man mindestens 12 Stunden vor Zugabe des sauren Härters der Kittharz-Lösung 0.01 bis 0.1 Val pro Liter eines primären Amins zusetzt.

BAD ORIGINAL